# EUROPÄISCHE PATENTSCHRIFT

(11) **EP 2 221 142 B1**
(45) Veröffentlichungstag und Bekanntmachung des Hinweises auf die Patenterteilung: **21.12.2011**
(21) Anmeldenummer: 10001709.4
(22) Anmeldetag: 19.02.2010
(51) Int. Cl.: B23Q 3/08, B23Q 3/10, B25B 5/06, B25B 5/08

(54) **Spannvorrichtung sowie Verfahren zum Betreiben der Spannvorrichtung**
Tensioning device and method for operating the tensioning device
Dispositif de serrage ainsi que procédé de fonctionnement du dispositif de serrage

(30) Priorität: 20.02.2009 DE 102009009800; 28.02.2009 DE 102009010835
(43) Veröffentlichungstag der Anmeldung: 25.08.2010
(73) Patentinhaber: Hofstetter Vorrichtungs- & Maschinenbau GmbH, 6106 Werthenstein (CH)
(72) Erfinder: Hofstetter, Rudolf, 6106 Werthenstein (CH)
(74) Vertreter: Winter, Martina

(56) Entgegenhaltungen:
- DE-A1- 4 311 857
- DE-A1- 19 537 461
- GB-A- 1 027 121
- US-A- 3 835 649

## Beschreibung

Die vorliegende Erfindung betrifft eine Spannvorrichtung mit mindestens zwei, Spannbacken aufweisenden, und an einem Träger angeordneten Spannmodulen. Die vorliegende Erfindung betrifft ferner ein Verfahren zum Betreiben einer Spannvorrichtung.

Gattungsgemäße Spannvorrichtungen sind an sich bekannt. Diese bekannten Spannvorrichtungen sind in der Regel komplex aufgebaut und somit kostspielig und störanfällig. Oft gestaltet sich auch die Umrüstung der Spannvorrichtungen zur Aufnahme unterschiedlicher zu bearbeitender Werkstücke schwierig. Ferner eignen sich die bekannten Spannvorrichtungen nicht dazu, die gespannten Werkstücke kontinuierlich einer Werkstück-Bearbeitungsmaschine zuzuführen und somit einen kontinuierlichen Betrieb der Werkstück-Bearbeitungsmaschine zu ermöglichen.

Aus der deutschen Offenlegungsschrift DE 195 37 461 A1 ist ein einzelner Kraftspanner bekannt, der jedoch nicht einer Spannvorrichtung zugeordnet ist. Ferner ist aus der Patentschrift GB 1 027 121 A eine einzelne Klemmbacke bekannt, die ebenfalls keiner Spannvorrichtung zugeordnet ist.

Die Aufgabe der vorliegenden Erfindung besteht somit darin, eine gattungsgemäße Spannvorrichtung derart weiterzuentwickeln, dass sie einfach aufgebaut, problemlos umrüstbar und für den kontinuierlichen Betrieb von Werkstück-Bearbeitungsmaschinen geeignet ist.

Diese Aufgabe wird mit einer Spannvorrichtung mit den Merkmalen des Patentanspruchs 1 gelöst. Erfindungsgemäß ist vorgesehen, dass die Spannvorrichtung eine Druckaufaufbauvorrichtung mit einem Anschluss für Druckluft zum Beaufschlagen von Hydraulikflüssigkeit mit der Druckluft aufweist, dass die Spannvorrichtung im Träger angeordnete Leitungen für einen geschlossenen Kreislauf der Hydraulikflüssigkeit aufweist und dass die mindestens zwei Spannmodule unabhängig voneinander in Wirkverbindung mit dem geschlossenen Kreislauf stehen.

Gegenstand der vorliegenden Erfindung ist schließlich ein Verfahren zum Betreiben einer derartigen Spannvorrichtung mit den folgenden Verfahrensschritten: Öffnen des Anschlusses über ein Ventil und Beaufschlagen des Pneumatikzylinders mit Druckluft; Kompression der im Reservoir aufgenommenen Hydraulikflüssigkeit; Beaufschlagen des mindestens einen Spannmoduls durch Zufluss von Hydraulikflüssigkeit zum Öffnen der Spannbacken über eine Leitung; Einlegen eines zu bearbeitenden Werkstücks in das Spannmodul und Spannen des Werkstücks unter Schließen der Spannbacken durch Abfluss von Hydraulikflüssigkeit über eine Leitung.

Die erfindungsgemäße Spannvorrichtung zeichnet sich insbesondere dadurch aus, dass sie einen geschlossenen Kreislauf für Hydraulikflüssigkeit zum hydraulischen Betätigen der Spannmodule aufweist, wobei die Hydraulikflüssigkeit ihrerseits mit Druckluft beaufschlagbar ist. Damit weist die erfindungsgemäße Spannvorrichtung nur eine zur äußeren Umgebung hin offene Leitung auf, nämlich den Anschluss für die Druckluft. Das hydraulische System ist in sich geschlossen und bietet große Betriebssicherheit bei geringer Störanfälligkeit. Es sind mindestens zwei Spannmodule vorgesehen, die unabhängig voneinander in Wirkverbindung mit dem geschlossenen, die Hydraulikflüssigkeit enthaltenden Kreislauf stehen, so dass unterschiedliche Werkstücke unabhängig voneinander gespannt werden können. Es können beliebig viele Spannmodule an den geschlossenen Kreislauf angeschlossen werden. Dies verleiht der erfindungsgemäßen Spannvorrichtung eine große Flexibilität und ermöglicht zahlreiche Einsatzmöglichkeiten bei kurzen Umrüstzeiten.

Es ist möglich, zahlreiche Werkstücke zugleich zu spannen und über einen langen Zeitraum (bspw. über Nacht) mit konstanter Kraft gespannt zu halten. Dies ermöglicht es bspw., die erfindungsgemäße Vorrichtung gewissermaßen "auf Vorrat" zu bestücken". Der Bestückungsvorgang ist automatisierbar, bspw. durch den Einsatz von Robotertechnik. Mit einer oder mehreren "auf Vorrat" bestückten erfindungsgemäßen Spannvorrichtungen kann eine Werkzeugmaschine kontinuierlich betrieben werden, indem ihr die Spannvorrichtungen nacheinander zugeführt werden. Daraus resultiert insgesamt eine einfache und kostengünstige Möglichkeit, mit vergleichsweise geringem konstruktivem Aufwand Werkzeugmaschinen optimal auszulasten. Die erfindungsgemäße Spannvorrichtung kann in ihren Abmessungen an die jeweilige Werkzeugmaschine angepasst sein, so dass ein Umbau oder eine Umrüstung der Werkzeugmaschine im Wesentlichen nicht erforderlich ist.

Vorteilhafte Weiterbildungen ergeben sich aus den Unteransprüchen.

In einer bevorzugten Weiterbildung sind die mindestens zwei Spannmodule am Träger reversibel befestigbar und mit dem geschlossenen Kreislauf in Wirkverbindung bringbar. Die erfindungsgemäße Spannvorrichtung kann somit auf besonders einfache Weise kostengünstig umgerüstet werden, so dass ihre Einsatzmöglichkeiten vervielfältigt werden.

Das Spannmodul hat den Vorteil, dass der Gesamtspannweg der Spannbacken in einem längeren Spannweg und einen kürzeren Spannweg unterteilt wird. Der längere Spannweg wird durch die federnde Vorspannung der Spannzunge bestimmt, während der kürzere Spannweg durch die hydraulische Beaufschlagung der Spannzunge bestimmt wird. Das bedeutet, dass die durch diverse Sicherheitsvorschriften vorgegebene Länge des hydraulisch unterstützten Spannwegs nicht überschritten wird und dennoch die Länge des Gesamtspannwegs der Spannbacken durch die freie Wahl der Länge des federnd unterstützten Spannwegs beliebig gestaltet werden kann. Die federnde Vorspannung der Spannzunge ist so ausgelegt, dass in einem entspannten Ruhezustand die Spannbacken teilweise geschlossen sind. Zum Einlegen eines Werkstücks in das Spannmodul werden die Spannbacken geöffnet. Die leichte Vorspannung des Werkstücks über den längeren Spannweg ergibt sich durch Rückkehr in den entspannten Ruhezustand, während das Fertigspannen des Werkstücks durch hydraulische Beaufschlagung der Spannzunge und die damit einhergehende vollständige Schließung der Spannbacken über den kürzeren Spannweg erreicht wird. Zweckmäßigerweise weist das Spannmodul am freien Ende der Spannzunge eine beidseitig hydraulisch beaufschlagbare Druckplatte auf. Damit kann auf besonders einfache Weise eine beidseitige Versorgung mit Hydraulikflüssigkeit erfolgen, insbesondere dann, wenn die Druckplatte in einen Spannzylinder aufgenommen ist und diesen in eine untere Kammer und eine obere Kammer teilt, wobei in jede Kammer eine Leitung für Hydraulikflüssigkeit mündet.

Wenn die Spannzunge mit Spannschuhen in Wirkverbindung steht, auf welchen die Spannbacken abnehmbar befestigt sind, können auf besonders einfache Weise beliebig ausgestaltete Spannbacken für unterschiedlichste Werkstücke zum Einsatz kommen.

Die Druckaufbauvorrichtung zeichnet sich dadurch aus, dass durch Beaufschlagung mit einem vergleichsweise geringen pneumatischen Druck ein vergleichsweise hoher hydraulischer Druck aufgebaut werden kann. Zugleich befindet sich die Hydraulikflüssigkeit in einem internen geschlossenen Kreislauf, der keinen äußeren Zu- oder Abgang aufweist. Damit wird die Betriebssicherheit der Druckaufbauvorrichtung wesentlich erhöht.

Zweckmäßigerweise sind in der Druckaufbauvorrichtung der Pneumatikzylinder und der Ausgleichszylinder auf einem Kolben gehalten, um eine optimale Wirkverbindung zu gewährleisten. Hierbei sollte vorzugsweise der Ausgleichszylinder das Volumen des Reservoirs für die Hydraulikflüssigkeit begrenzen und bestimmen.

Wenn der Anschluss manuell, bspw. mit einem Hand- oder Fußhebel, oder automatisch, bspw. über eine Andockstation für einen Roboter, betätigbares Ventil aufweist, kann er im Betrieb besonders einfach betätigt werden.

Vorzugsweise wird nach dem Fertigspannen der Anschluss für die Druckluft geschlossen und der hydraulische Druck im geschlossenen Kreislauf aufrechterhalten. Auf diese Weise können Werkstücke auf besonders einfache Weise "auf Vorrat" und über einen längeren Zeitraum gespannt werden, bspw. um eine Werkzeugmaschine kontinuierlich zu betreiben.

Vorzugsweise wird nach dem Einlegen eines zu bearbeitenden Werkstücks in das Spannmodul das Werkstück unter Schließen der Spannbacken durch Abfluss von Hydraulikflüssigkeit über die Leitung vorgespannt. Dann können nach dem Vorspannen die Spannmodule durch Zufluss von Hydraulikflüssigkeit über die Leitung derart beaufschlagt werden, dass die Spannbacken geschlossen werden und das Werkstück fertig gespannt wird. In diesem Fall ist es von besonderem Vorteil, sämtliche Werkstücke in den Spannmodulen gleichzeitig fertig zu spannen.

Ein Ausführungsbeispiel der vorliegenden Erfindung wird im Folgenden anhand der beigefügten Zeichnungen näher beschrieben. Es zeigen in schematischer, nicht maßstabsgetreuer Darstellung:
- Figur 1a: ein Ausführungsbeispiel einer erfindungsgemäßen Spannvorrichtung in einer Vorderansicht mit sechs Spannmodulen;
- Figur 1b: die Spannvorrichtung gemäß Figur 1a in einer Rückansicht mit vier Spannmo- dulen;
- Figur 2: eine teilweise geschnittene Ansicht einer Ausführungsform eines erfindungs- gemäßen Spannmoduls;
- Figur 3: das Spannmodul gemäß Figur 2 in einer um 90° gedrehten, teilweise geschnit- tenen Ansicht;
- Figur 4: ein Ausführungsbeispiel einer Druckaufbauvorrichtung im Schnitt;
- Figur 5: ein Ausführungsbeispiel eines Schaltplans zum Betrieb der Spannvorrichtung gemäß Figur 1 mit der Druckaufbauvorrichtung gemäß Figur 4.

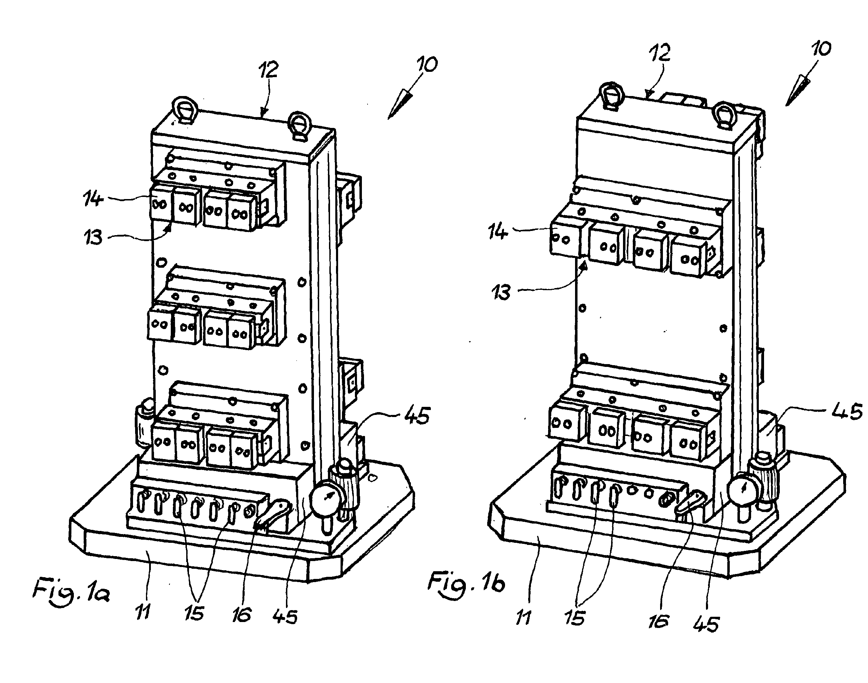

Die Figuren 1a und 1b zeigen ein Ausführungsbeispiel einer erfindungsgemäßen Spannvorrichtung 10, in diesem Fall eine Mehrfach-Spannvorrichtung. Die Spannvorrichtung 10 weist einen auf einem Tisch 11 befestigten und im Ausführungsbeispiel vertikal ausgerichteten Träger 12 auf. Der Träger 12 kann selbstverständlich beliebig ausgestaltet und orientiert sein. Wesentlich ist, dass auf dem Träger 12 Spannmodule 13 befestigt sind, deren Anzahl frei wählbar ist. Jedes Spannmodul 13 ist im Ausführungsbeispiel mit zwei Spannbacken 14 zum Spannen von Werkstücken (nicht dargestellt) versehen. Die Spannbacken 14 werden mittels eines Fluids geöffnet und geschlossen und stehen zu diesem Zweck mit Fluidleitungen in Wirkverbindung, die im Ausführungsbeispiel innerhalb des Trägers 12 verlaufen und daher nicht dargestellt sind. Auf dem Tisch 11 ist für jedes Spannmodul 13 ein Schalter 15 vorgesehen, mit dem ein Ventil geöffnet oder geschlossen werden kann, so dass jedes Spannmodul 13 einzeln mit Fluid versorgt und somit gezielt betätigt werden kann. Ein Hauptschalter 16 dient dazu, ein Hauptventil zu öffnen und zu schließen, um die Zufuhr des Fluids von außen zu kontrollieren. Eine Vorrichtung zur Fluidversorgung, im Ausführungsbeispiel eine erfindungsgemäße Druckaufbauvorrichtung, ist in einer Umkleidung 45 zwischen dem Tisch 11 und dem Träger 12 vorgesehen (nicht dargestellt).

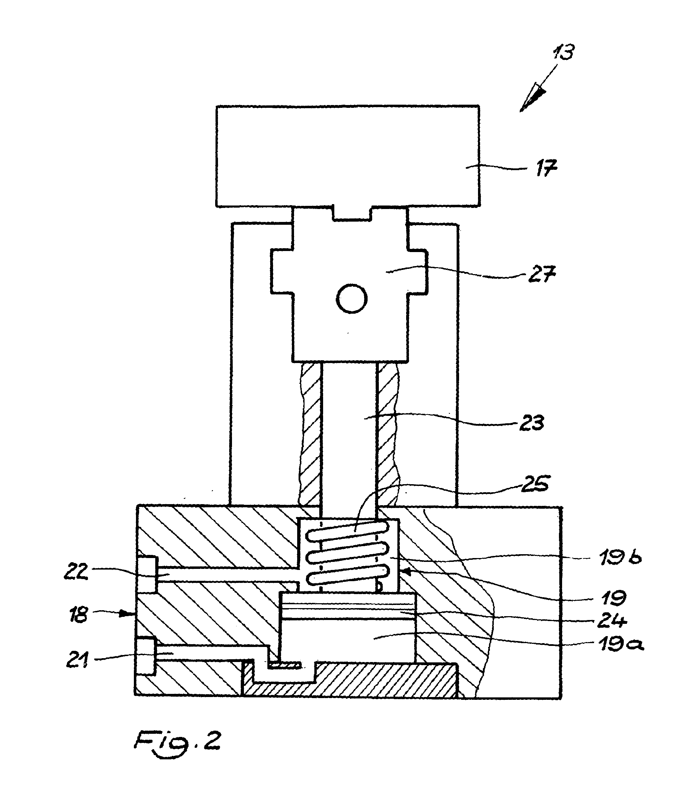

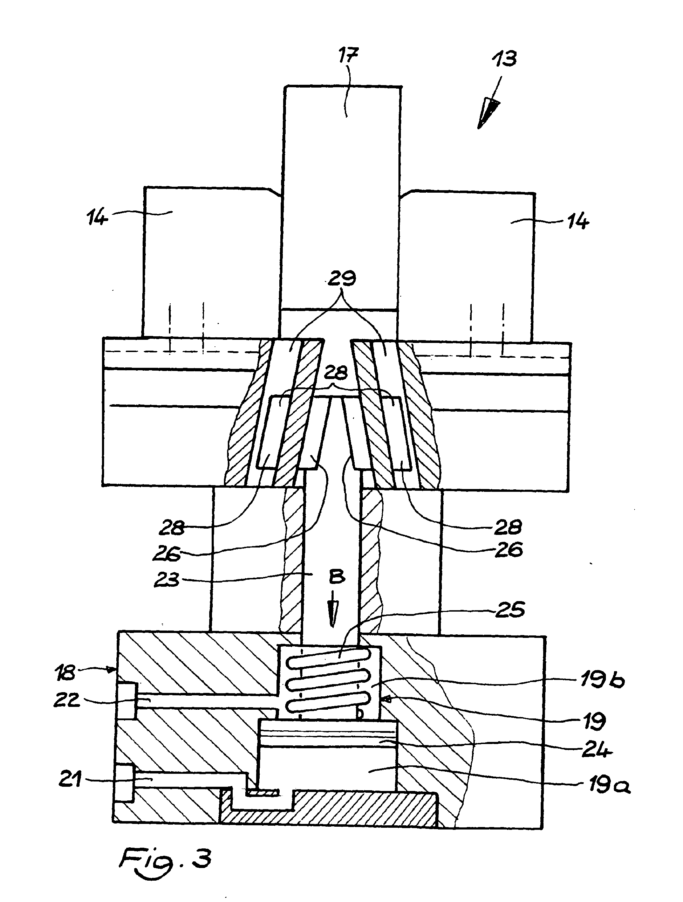

Im Ausführungsbeispiel sind am Träger 12 erfindungsgemäße Spannmodule 13 befestigt, deren grundsätzlicher Aufbau sich aus den Figuren 2 und 3 ergibt. In Figur 3 ist zusätzlich ein zu bearbeitendes Werkstück 17 angedeutet. Das Spannmodul 13 weist ein Gehäuse 18 auf, mit dem es auf dem Träger 12 befestigt werden kann. Im Gehäuse 18 ist ein Spannzylinder 19 vorgesehen. Über Fluidleitungen 21, 22 kann dem Spannzylinder 19 Fluid, bspw. Hydraulikflüssigkeit, zugeführt oder Fluid aus dem Spannzylinder 19 entfernt werden. Im Spannzylinder 19 ist eine Spannzunge 23 vertikal bewegbar aufgenommen, an deren unteren freien Ende eine Druckplatte 24 befestigt ist. Die Druckplatte 24 teilt den Spannzylinder 19 in eine untere Kammer 19a, in welche die Leitung 21 mündet, und in eine obere Kammer 19b, in welche die Leitung 22 mündet. Zwischen der Druckplatte 24 und dem oberen Ende des Spannzylinders 19 ist eine Druckfeder 25 angeordnet, die sich einerseits auf der Oberseite der Druckplatte 24 und andererseits auf der Unterseite des Spannzylinders 19 abstützt. Am oberen freien Ende der Spannzunge 23 sind zwei Führungselemente 26 ausgebildet, die im Ausführungsbeispiel über eine Kulissenführung mit zwei Spannschuhen 27 in Eingriff stehen. Hierbei sind in an sich bekannter Weise an den Führungselementen 26 vorgesehene T-förmige Gleitstücke 28 jeweils in eine an jedem Spannschuh 27 ausgebildete Nut 29 bewegbar aufgenommen. Die Kulissenführung kann vorzugsweise in einem Winkel α von 5° bis 30° zur Vertikalen geneigt sein. Auf den Spannschuhen 27 sind die Spannbacken 14 abnehmbar befestigt. Die Spannbacken 14 können also problemlos ausgetauscht werden, so dass das Spannmodul 13 an beliebige zu spannende Werkstücke 17 angepasst werden kann.

Das Spannmodul 13 wird wie folgt betätigt. Im entspannten Zustand, d.h. wenn kein Fluiddruck auf die Druckplatte 24 wirkt, ist die Druckfeder 25 entspannt und übt auf die Druckplatte 24 in Richtung des Pfeils B, d.h. in Richtung des Bodens des Gehäuses 18, eine Kraft aus. Dadurch wird die Spannzunge 23 ebenfalls in Richtung des Pfeils B, also in Richtung des Bodens des Gehäuses 18 bewegt, so dass auch die Gleitstücke 28 sich in Richtung des Pfeils B bewegen und sich die Spannschuhe 27 und damit auch die Spannbacken 14 aufeinander zu bewegen. Im entspannten Zustand sind die Spannbacken 14 also teilweise geschlossen, und es kann kein Werkstück 17 eingelegt werden. Zu diesem Zweck müssen die Spannbacken 14 geöffnet werden. Hierfür wird Fluid durch die Leitung 21 in die untere Kammer 19a des Spannzylinders 19 gepresst. Das Fluid übt einen Druck auf die Druckplatte 24 aus, welcher entgegen der Federkraft der Druckfeder 25 wirkt. Sobald die Federkraft der Druckfeder 25 überwunden ist, wird die Druckplatte 24 und damit die Spannzunge 23 nach oben entgegen der Richtung des Pfeils B bewegt, wobei die Druckfeder 25 zusammengepresst wird. Bei dieser Bewegung der Spannzunge 23 werden die Gleitstücke 28 entgegen der Richtung des Pfeils B bewegt, so dass sich die Spannschuhe 27 und damit auch die Spannbacken 14 voneinander weg bewegen. In die so geöffneten Spannbacken 14 kann ein zu bearbeitendes Werkstück 17 eingelegt werden. Nun wird das Fluid durch die Leitung 21 aus der unteren Kammer 19a des Spannzylinders 19 entfernt, so dass sich die Druckfeder 25 wieder entspannt und wie oben beschrieben die Spannzunge 23 in Richtung des Pfeils B, also in Richtung des Bodens des Gehäuses 18 bewegt wird, so dass die Gleitstücke 28 mitgenommen werden und sich die Spannschuhe 27 und damit auch die Spannbacken 14 aufeinander zu bewegen. Das zu bearbeitende Werkstück 17 ist nun zwischen den Spannbacken 14 gehalten und damit leicht vorgespannt, aber noch nicht endgültig fertig gespannt. Zum abschließenden Fertigspannen wird Fluid durch die Leitung 22 in die obere Kammer 19b des Spannzylinders 19 gepresst. Das Fluid übt einen Druck auf die Druckplatte 24 aus, welcher in Richtung des Pfeils B, also in Richtung des Bodens des Gehäuses 18 wirkt. Die Druckplatte 24 und damit die Spannzunge 23 werden nach unten in Richtung des Pfeils B bewegt, wobei die Druckfeder 25 gedehnt wird. Bei dieser Bewegung der Spannzunge 23 werden die Gleitstücke 28 in Richtung des Pfeils B bewegt, so dass sich die Spannschuhe 27 und damit auch die Spannbacken 14 aufeinander zu bewegen. Nun ist das zu bearbeitende Werkstück 17 endgültig fertig gespannt.

Die leichte Vorspannung der Werkstücke 17 erfolgt somit über einen federelastischen Mechanismus, während die Fertigspannung über einen Hydraulikmechanismus erfolgt. Der hydraulisch unterstützte Spannweg zum Fertigspannen ist hierbei wesentlich kürzer als der federunterstützte Spannweg beim leichten Vorspannen. Der hydraulisch unterstützte Spannweg ist höchstens so lang, wie es die jeweiligen gesetzlichen Sicherheitsvorschriften zulassen. Das erfindungsgemäße Spannmodul 13 kann also auf einfache Weise durch individuelle Auslegung der Länge des hydraulisch unterstützten Spannwegs an gesetzliche Vorschriften verschiedener Länder angepasst werden.

Bei einem Winkel α von etwa 6° oder weniger tritt eine Selbsthemmung ein, d.h. nach dem Öffnen der Spannschuhe 27 bzw. Spannbacken 14 verbleiben die Gleitstücke 28 in dieser Position auch dann, wenn die Druckfeder 25 wieder entspannt wird.

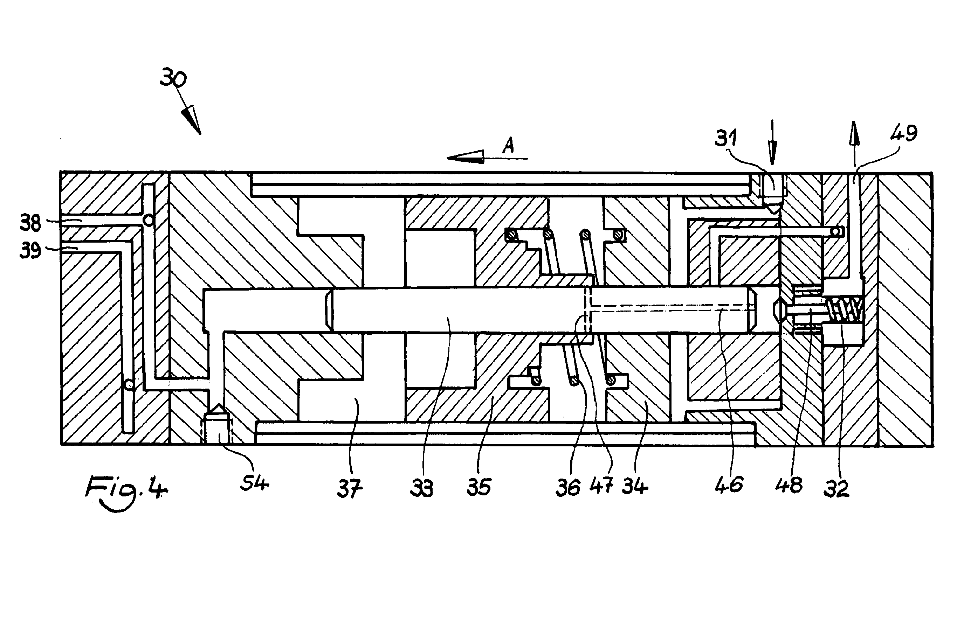

Figur 4 zeigt ein Ausführungsbeispiel einer Druckaufbauvorrichtung 30, wie sie bspw. zum Betätigen der oben beschriebenen Spannmodule 13 verwendet werden kann. Die Druckaufbauvorrichtung 30 ist nicht nur zum Betrieb der erfindungsgemäßen Spannvorrichtung 10, sondern zum Betrieb beliebiger Vorrichtungen, die hydraulisch betätigt werden, geeignet.

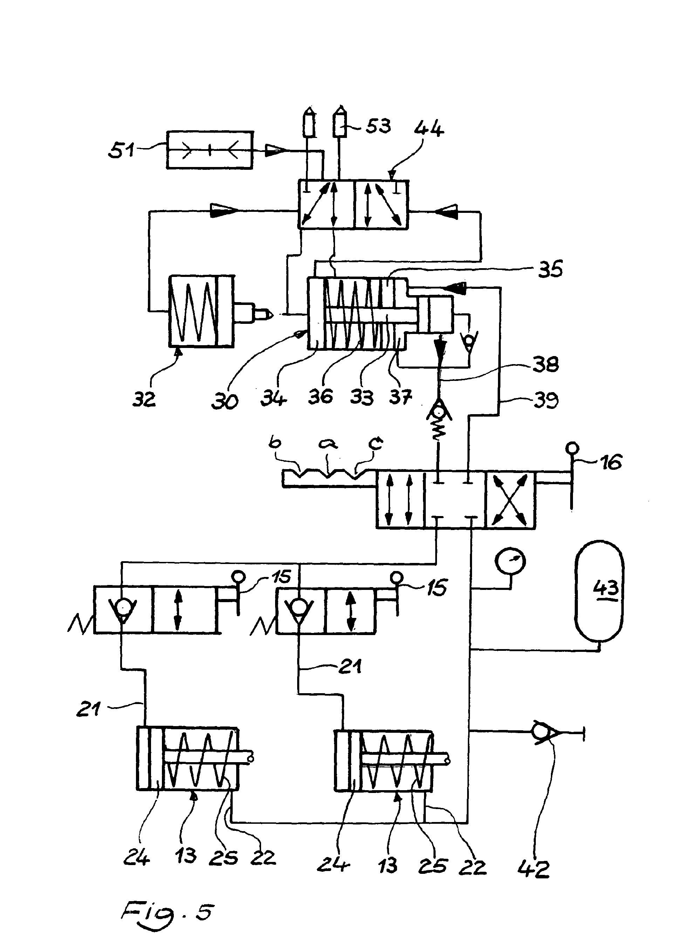

Die Druckaufbauvorrichtung 30 weist einen Anschluss 31 für Druckluft auf. Hier kann bspw. über ein Ventil 44, im Ausführungsbeispiel ein 4/2-Ventil (vgl. Figur 5) und einen Schalter (nicht dargestellt) eine Druckluftleitung angeschlossen sein. Der Schalter kann entweder manuell, bspw. mittels Hand- oder Fußhebel, oder automatisch, bspw. über eine Roboterautomatik, betätigt werden. Durch Betätigung des Schalters wird über das Ventil 44 und den Anschluss 31 der Druckaufbauvorrichtung 30 Druckluft zugeführt. Mit dieser Druckluft wird ein mit einem Kolben 33 fest verbundener Pneumatikzylinder 34 beaufschlagt. In Richtung des Pfeils A schließt sich an den Pneumatikzylinder 34 ein Ausgleichszylinder 35 an, der mittels einer Druckfeder 36 mit dem Pneumatikzylinder 34 verspannt ist. An den Ausgleichszylinder 35 schließt sich ein Reservoir 37 an, welches Hydraulikflüssigkeit, bspw. Hydrauliköl, enthält. Vom Reservoir 37 führt eine Zuflussleitung 38 zu der hydraulisch zu betätigenden Vorrichtung, im Ausführungsbeispiel zu einer Spannvorrichtung 10. Eine Rückflussleitung 39 führt von der hydraulisch zu betätigenden Vorrichtung zurück zum Reservoir 37. Der Kolben 33 ist im Ausführungsbeispiel einteilig ausgebildet und mit einer Axialbohrung 46 sowie einer davon ausgehenden Querbohrung 47 versehen. Am freien Ende des Kolbens 33 ist ein Umschaltzylinder 32 vorgesehen, der einen federbeaufschlagten Endanschlag 48 aufweist, welcher in eine Austrittsleitung 49 für Druckluft mündet.

Die Druckaufbauvorrichtung 30 wird wie folgt betätigt. Durch Beaufschlagung mit Druckluft (im Ausführungsbeispiel etwa 6 bar) wird der Pneumatikzylinder 34 mit dem Kolben 33 in Richtung des Pfeils A bewegt. Dadurch wird zunächst die Druckfeder 36 komprimiert. Anschließend wird der Ausgleichszylinder 35 betätigt, so dass er das Volumen des Reservoirs 37 verkleinert. Damit wird in der Hydraulikflüssigkeit ein gewünschter hydraulischer Druck erzeugt, der größer ist als der Druck, mit dem der Pneumatikzylinder 34 ursprünglich beaufschlagt wurde (im Ausführungsbeispiel etwa 120 bar). Der Kolben 33 und der Pneumatikzylinder 34 wirken somit als Druckumsetzer, die einen pneumatischen Druck in einen hydraulischen Druck konvertieren.

Nach dem Verschließen des Anschlusses 31 kann der so voreingestellte hydraulische Druck im Wesentlichen konstant aufrechterhalten werden. Wenn nun eine an die Zuflussleitung 38 und Rückflussleitung 39 angeschlossene Vorrichtung, bspw. eine Spannvorrichtung 10, hydraulisch betätigt werden soll, kann an dieser Vorrichtung bspw. ein Ventil geöffnet werden, das die Zuflussleitung 38 freigibt. Die Hydraulikflüssigkeit strömt nun aus dem Reservoir 37 in die zu betätigende Vorrichtung, die damit entsprechend in Betrieb gesetzt wird. Dabei wird die Druckfeder 36 entspannt, so dass der Ausgleichszylinder 35 in Richtung des Pfeils A bewegt und das Volumen des Reservoirs 37 so verkleinert wird, dass der voreingestellte hydraulische Druck im Wesentlichen konstant bleibt.

Wenn der hydraulische Druck in der zu betätigenden Vorrichtung wieder reduziert werden soll, wird der Anschluss 31 bzw. das Ventil 44 geöffnet, so dass der am Pneumatikzylinder 34 anliegende pneumatische Druck reduziert wird. Damit bewegt sich der Pneumatikzylinder 34 mit dem Kolben 33 entgegen der Richtung des Pfeils A, wobei zuerst die Druckfeder 36 entspannt und dann der Ausgleichszylinder 35 mitgenommen wird. Das Volumen des Reservoirs 37 wird somit vergrößert, so dass der in der Hydraulikflüssigkeit herrschende Druck reduziert wird und die Hydraulikflüssigkeit über die Rückflussleitung 39 in das Reservoir 37 zurückströmt. Durch die Bewegung des Kolbens 33 entgegen der Richtung des Pfeils A gelangt die Querbohrung 47 in Verbindung mit dem den Pneumatikzylinder 34 und den Ausgleichszylinder 35 trennenden Hohlraum, so dass Luft durch die Querbohrung 47 und die Axialbohrung 46 strömt. Das freie Ende des Kolbens 33 trifft auf den Endanschlag 48, der die Austrittsleitung 49 freigibt, so dass die durch die Axialbohrung 46 strömende Luft über die Austrittsleitung 49 nach außen tritt. Im Ausführungsbeispiel wird die austretende Luft zum Ventil 44 geleitet und erzeugt dort einen Umschaltimpuls, der bewirkt, dass das Ventil 44 umschaltet. Auf diese Weise wird ein abwechselndes, oszillierendes Öffnen und Schließen des Ventils 44 bewirkt. Als Sicherheitsmaßnahme ist eine Entlüftungsöffnung 54 vorgesehen.

Die Druckaufbauvorrichtung 30 und die hydraulisch zu betätigende Vorrichtung bilden somit einen geschlossenen Kreislauf, in dem die Hydraulikflüssigkeit zirkuliert. Mit der Druckaufbauvorrichtung 30 können beliebig viele hydraulische Vorrichtungen betätigt werden. Dabei genügt es zum Aufbau eines hinreichend hohen Drucks in der Hydraulikflüssigkeit, die Druckaufbauvorrichtung 30 über eine einzigen Anschluss 31 mit Druckluft zu beaufschlagen, wobei der Druck der Druckluft wesentlich geringer ist als der erzielte Druck der Hydraulikflüssigkeit. Die Druckaufbauvorrichtung 30 ermöglicht einen konstanten automatischen Druckaufbau im Reservoir 37, der im geschlossenen Kreislauf im Wesentlichen konstant aufrechterhalten werden kann. Dabei erfolgt der Druckaufbau ausschließlich innerhalb der Druckaufbauvorrichtung 30, so dass eine besonders hohe Betriebssicherheit gewährleistet ist. Die Druckaufbauvorrichtung 30 kann an alle hydraulisch zu betätigenden Maschinen, Geräte und Vorrichtungen angeschlossen werden, ohne dass diese umgerüstet werden müssen.

Die im Ausführungsbeispiel mit Spannmodulen 13 versehene erfindungsgemäße Spannvorrichtung 10 kann mit der Druckaufbauvorrichtung 30 wie folgt betrieben werden (vgl. auch Figur 5). Das 4/2-Ventil 44 ist im Ausführungsbeispiel mit einer Schnellkupplung 51 und Schalldämpfern 53 ausgestattet. Durch das Betätigen des Ventils 44 (bspw. mittels eines Schalters) wird der Pneumatikzylinder 34 mit Druckluft beaufschlagt. Dadurch wird, wie oben beschrieben, der Ausgleichszylinder 35 betätigt und ein hydraulischer Druck im Reservoir 37 aufgebaut. Die Zuflussleitung 38 verbindet das Reservoir 37 mit dem Hauptschalter 16 der Spannvorrichtung 10 (vgl. Figur 1).

Der Hauptschalter 16 kann im Ausführungsbeispiel in drei Stellungen geschaltet werden. In einer ersten Stellung a) ist der Hauptschalter 16 geschlossen und die Druckaufbaueinheit 30 vollständig von der Spannvorrichtung 10 getrennt. In einer zweiten Stellung b) ist der Hauptschalter 16 so geöffnet, dass die Zuflussleitung 38 mit den Leitungen 21 der Spannmodule 13 verbunden ist. In einer dritten Stellung c) ist der Hauptschalter 16 so geöffnet, dass die Zuflussleitung 38 mit den Leitungen 22 der Spannmodule 13 verbunden ist.

Wie oben beschrieben, sind in einer Ruhestellung die Spannbacken 14 der Spannmodule 13 teilweise geschlossen. Zum Einlegen eines Werkstücks 17 in ein Spannmodul 13 müssen die Spannbacken 14 geöffnet werden. Zu diesem Zweck wird der Hauptschalter 16 nach dem Beaufschlagen der Druckaufbaueinheit 30 mit Druckluft und dem Aufbau des hydraulischen Drucks im Reservoir 37 so geschaltet, dass die Zuflussleitung 38 mit der Leitung 21 des Spannmoduls 13 verbunden wird (Stellung b)). In der Leitung 21 jedes Spannmoduls 13 ist ein Schalter 15 vorgesehen (vgl. Figur 1). Ein Spannmodul 13 wird nur dann über die Leitung 21 mit Hydraulikflüssigkeit beaufschlagt, wenn der zugeordnete Schalter 15 vorher geöffnet wird. Wenn also nach Beaufschlagen der Druckaufbaueinheit 30 mit Druckluft der Hauptschalter 16 und ein einem Spannmodul 13 zugeordneter Schalter 15 geöffnet werden, so dass die Zuflussleitung 38 mit der Leitung 21 verbunden wird, wird die Hydraulikflüssigkeit der unteren Kammer 19a jedes Spannzylinders 19 zugeführt, und die Spannbacken 14 des betreffenden Spannmoduls 13 werden geöffnet, wie es in Bezug auf die Figuren 2 und 3 beschrieben wurde. Durch Öffnen der Schalter 15 kann also jedes Spannmodul 13 gezielt angesteuert werden, und die Spannbacken 14 jedes Spannmoduls 13 können unabhängig von denen der anderen Spannmodule 13 geöffnet werden. Auf diese Weise können alle Spannmodule 13 mit unterschiedlichen Werkstücken 17 bestückt werden.

Die Werkstücke 17 werden in die Spannmodule 13 eingelegt und wie oben beschrieben leicht vorgespannt. Hierzu wird der Hauptschalter 16 bei geöffnetem Schalter 15 für das betreffende Spannmodul 13 so geschaltet, dass die Leitung 21 des Spannmoduls 13 mit der Rückflussleitung 39 der Druckaufbauvorrichtung 30 verbunden wird. Wie oben beschrieben, wird das Volumen des Reservoirs 37 vergrößert, und die Hydraulikflüssigkeit fließt in das Reservoir 37 zurück. Das Spannmodul 13 kehrt wie oben beschrieben in seine Ruhestellung mit teilweise geschlossenen Spannbacken 14 zurück, so dass das Werkstück 17 leicht vorgespannt wird.

Das Fertigspannen der Werkstücke 17 wird vorzugsweise erst dann vorgenommen, wenn die Spannvorrichtung 10 mit allen zu bearbeitenden Werkstücken 17 bestückt ist, im optimalen Fall also alle Spannmodule 13 belegt sind. Zum Zweck des Fertigspannens wird nach Beaufschlagen der Druckaufbaueinheit 30 mit Druckluft und erneutem Aufbau eines hydraulischen Drucks im Reservoir 37 der Hauptschalter 16 so geschaltet, dass die Zuflussleitung 38 der Druckaufbauvorrichtung 30 mit den Leitungen 22 der Spannmodule 13 verbunden wird (Stellung c)). Aus Figur 5 geht hervor, dass bei dem hier dargestellten Ausführungsbeispiel die Zuflussleitung 38 unter Umgehung der den Spannmodulen 13 zugeordneten Schalter 15 direkt mit den Leitungen 22 verbunden wird. Andere Ausgestaltungen sind selbstverständlich ebenfalls denkbar. Die unter Druck stehende Hydraulikflüssigkeit wird durch die Leitungen 22 jedes Spannmoduls 13 der oberen Kammer 19b jedes Spannzylinders 19 zugeführt (vgl. Figuren 2 und 3), so dass alle Werkstücke 17 gleichzeitig, wie oben beschrieben, fertig gespannt werden.

Wenn der Anschluss 31 verschlossen ist, kann der hydraulische Druck in den Leitungen 38, 22 sehr lange im Wesentlichen konstant aufrechterhalten werden. Das bedeutet, dass eine oder mehrere Spannvorrichtungen 10 bestückt werden und die Werkstücke 17 nacheinander, bspw. über Nacht, kontinuierlich einer Werkzeugmaschine zugeführt und ohne Unterbrechung des Betriebs der Werkzeugmaschine bearbeitet werden können. Bei dem hier dargestellten Ausführungsbeispiel ist für eine derartige Anwendung an der Leitung 38 bzw. 22 zweckmäßigerweise eine Drucküberwachungseinrichtung 42 vorgesehen. Ferner ist ein zusätzlicher Speicher 43 für Hydraulikflüssigkeit vorgesehen, der im Fall einer in den Leitungen 38, 22 auftretenden Leckage Hydraulikflüssigkeit einspeist, um den gewünschten hydraulischen Druck konstant zu halten (vgl. Figur 5).

## Patentansprüche

1. Spannvorrichtung (10) mit mindestens zwei, Spannbacken (14) aufweisenden, und an einem Träger (12) angeordneten Spannmodulen (13), **dadurch gekennzeichnet, dass** die Spannvorrichtung (10) eine Druckaufaufbauvorrichtung (30) mit einem Anschluss (31) für Druckluft zum Beaufschlagen von Hydraulikflüssigkeit mit der Druckluft aufweist, dass die Spannvorrichtung (10) im Träger (12) angeordnete Leitungen (21, 22, 38, 39) für einen geschlossenen Kreislauf der Hydraulikflüssigkeit aufweist und dass die mindestens zwei Spannmodule (13) unabhängig voneinander in Wirkverbindung mit dem geschlossenen Kreislauf stehen.

2. Spannvorrichtung nach Anspruch 1, **dadurch gekennzeichnet, dass** an dem Träger (12) die mindestens zwei Spannmodule (13) reversibel befestigbar und mit dem geschlossenen Kreislauf in Wirkverbindung bringbar sind.

3. Spannvorrichtung (10) nach einem der Ansprüche 1 oder 2, **dadurch gekennzeichnet, dass** das Spannmodul (13) eine federnd vorgespannte, beidseitig hydraulisch beaufschlagbare Spannzunge (23) aufweist, die mit den Spannbacken (14) in Wirkverbindung steht und im Ruhezustand die Spannbacken (14) in einer Vorspannstellung hält.

4. Spannvorrichtung nach Anspruch 3, **dadurch gekennzeichnet, dass** am freien Ende der Spannzunge (23) eine beidseitig hydraulisch beaufschlagbare Druckplatte (24) vorgesehen ist.

5. Spannvorrichtung nach Anspruch 4, **dadurch gekennzeichnet, dass** die Druckplatte (24) in einen Spannzylinder (19) aufgenommen ist und diesen in eine untere Kammer (19a) und eine obere Kammer (19b) teilt, und dass in jede Kammer (19a, 19b) eine Leitung (21; 22) für Hydraulikflüssigkeit mündet.

6. Spannvorrichtung nach einem der Ansprüche 3 bis 5, **dadurch gekennzeichnet, dass** die Spannzunge (23) mit Spannschuhen (27) in Wirkverbindung steht, auf welchen die Spannbacken (14) abnehmbar befestigt sind.

7. Spannvorrichtung nach einem der vorhergehenden Ansprüche, **dadurch gekennzeichnet, dass** der Anschluss (31) für Druckluft der Druckaufbauvorrichtung (30) mit einem mit Druckluft beaufschlagbaren Pneumatikzylinder (34) in Wirkverbindung steht, der mit einem Ausgleichszylinder (35) federnd verspannt ist, welcher mit einem Reservoir (37) für Hydraulikflüssigkeit in Wirkverbindung steht, und dass das Reservoir (37) mindestens eine Zuflussleitung (38) und mindestens eine Rückflussleitung (39) für eine hydraulisch betätigbare Vorrichtung (10) aufweist, derart, dass mit der hydraulisch betätigbaren Vorrichtung ein geschlossener Kreislauf für Hydraulikflüssigkeit herstellbar ist.

8. Spannvorrichtung nach Anspruch 7, **dadurch gekennzeichnet, dass** der Pneumatikzylinder (34) und der Ausgleichszylinder (35) der Druckaufbauvorrichtung (30) auf einem Kolben (33) gehalten sind.

9. Spannvorrichtung nach Anspruch 7 oder 8, **dadurch gekennzeichnet, dass** der Ausgleichszylinder (35) das Volumen des Reservoirs (37) begrenzt und bestimmt.

10. Spannvorrichtung nach einem der Ansprüche 7 bis 9, **dadurch gekennzeichnet, dass** der Anschluss (31) ein manuell oder automatisch betätigbares Ventil (44) aufweist.

11. Verfahren zum Betreiben einer Spannvorrichtung (10) nach einem der Ansprüche 7 bis 10, **gekennzeichnet durch** die folgenden Verfahrensschritte:
- Öffnen des Anschlusses (31) über ein Ventil (44) und Beaufschlagen des Pneumatikzylinders (34) mit Druckluft;
- Kompression der im Reservoir (37) aufgenommenen Hydraulikflüssigkeit;
- Beaufschlagen des mindestens einen Spannmoduls (13) **durch** Zufluss von Hydraulikflüssigkeit zum Öffnen der Spannbacken (14) über eine Leitung (21);
- Einlegen eines zu bearbeitenden Werkstücks (17) in das Spannmodul (13);
- Spannen des Werkstücks (17) unter Schließen der Spannbacken (14) **durch** Abfluss von Hydraulikflüssigkeit über eine Leitung (22).

12. Verfahren nach Anspruch 11, **dadurch gekennzeichnet, dass** nach dem Fertigspannen der Anschluss (31) geschlossen wird und der hydraulische Druck im geschlossenen Kreislauf aufrechterhalten wird.

13. Verfahren nach Anspruch 11 oder 12, **dadurch gekennzeichnet, dass** nach dem Einlegen eines zu bearbeitenden Werkstücks (17) in das Spannmodul (13) das Werkstück (17) unter Schließen der Spannbacken (14) durch Abfluss von Hydraulikflüssigkeit über die Leitung (22) vorgespannt wird.

14. Verfahren nach Anspruch 13, **dadurch gekennzeichnet, dass** nach dem Vorspannen das Spannmodul (13) durch Zufluss von Hydraulikflüssigkeit über die Leitung (21) derart beaufschlagt wird, dass die Spannbacken (14) geschlossen werden und das Werkstück (17) fertig gespannt wird.

15. Verfahren nach Anspruch 14, **dadurch gekennzeichnet, dass** nach dem Vorspannen sämtliche Werkstücke in den Spannmodulen (13) gleichzeitig fertig gespannt werden.

## Claims

1. Clamping device (10) with at least two clamping modules (13), said clamping modules (13) being arranged on a carrier (12) and having clamping jaws (14), **characterized in that** the clamping device (10) is provided with means (30) for building up pressure having a connection (31) for compressed air in order to apply pressure to a hydraulic fluid by said compressed air, that the clamping device (10) is provided with fluid lines (21, 22, 38, 39), said fluid lines (21, 22, 38, 39) being arranged within the carrier (12) to form a closed circuit of the hydraulic fluid and that the at least two clamping modules (13) are in operative connection with the closed circuit independently of each other.

2. Clamping device according to claim 1, **characterized in that** the at least two clamping modules (13) are mountable on the carrier (12) and can be brought in operative connection with the closed circuit reversibly.

3. Clamping device according to one of the claims 1 or 2, **characterized in that** the clamping module (13) is provided with a flexibly pre-tensioned, on both sides hydraulically pressurizable clamping element (23) which is in operative connection with the clamping jaws (14) and which, in a rest state, keeps the clamping jaws (14) in a pre-clamping position.

4. Clamping device according to claim 3, **characterized in that** a pressure plate (24) is provided at the free end of the clamping element (23), said pressure plate (24) being on both sides hydraulically pressurizable.

5. Clamping device according to claim 4, **characterized in that** the pressure plate (24) is received in a clamping cylinder (19), dividing said clamping cylinder (19) in a lower chamber (19a) and an upper chamber (19b) and that a fluid line (21, 22) for a hydraulic fluid is joined with each chamber (19a, 19b).

6. Clamping device according to any of the claims 3 to 5, **characterized in that** the clamping element (23) is in operative contact with clamping shoes (27), on which the clamping jaws (14) are removably mounted.

7. Clamping device according to any of the preceding claims, **characterized in that** the connection (31) for compressed air of the means (30) for building up pressure is in operative contact with a pneumatic cylinder (34), said pneumatic cylinder being pressurizable with compressed air and being flexibly connected with a compensating cylinder (35), which is in operating contact with a reservoir (37) for a hydraulic fluid, and that the reservoir (37) is provided with at least one inlet line (38) and at least one outlet line (39) for a hydraulically operatable device (10), such that a closed circuit for a hydraulic fluid can be established with said hydraulically operatable device.

8. Clamping device according to claim 7, **characterized in that** the pneumatic cylinder (34) and the compensating cylinder (35) of the means (30) for building up pressure are connected with a piston (33).

9. Clamping device according to one of the claims 7 or 8, **characterized in that** the compensating cylinder (35) delimits and determines the volume of the reservoir (37).

10. Clamping device according to any of the claims 7 to 9, **characterized in that** the connection (31) is provided with a manually or automatically operable valve (44).

11. Method for operating a clamping device (10) according to any of the claims 7 to 10, **characterized by** the following steps:
- Opening of the connection (31) via a valve (44) and pressurizing of the pneumatic cylinder (34) with compressed air;
- Compressing of the hydraulic fluid which is received in the reservoir (37);
- Pressurizing of the at least one clamping module (13) by the inflow of a hydraulic fluid via a fluid line (21) in order to open the clamping jaws (14);
- Depositing a workpiece (17) to be processed in the clamping module (13);
- Clamping of the workpiece (17) by closing of the clamping jaws (14) by the outflow of a hydraulic fluid via a fluid line (22).

12. Method according to claim 11, **characterized in that** the connection (31) is closed after the final clamping and the hydraulic pressure is maintained within the closed circuit.

13. Method according to one of the claims 11 or 12, **characterized in that** after the deposition of the workpiece (17) to be processed in the clamping module (13), said workpiece (17) is pre-clamped by closing the clamping jaws (14) by the outflow of a hydraulic fluid via the fluid line (22).

14. Method according to claim 13, **characterized in that** after the pre-clamping the clamping module (13) is pressurized by the inflow of a hydraulic fluid via the fluid line (21) such that the clamping jaws (14) are closed and the workpiece (17) is finally clamped.

15. Method according to claim 14, **characterized in that** after the pre-clamping all workpieces deposited in the clamping modules (13) are finally clamped simultanoeulsy.

## Revendications

1. Dispositif de serrage (10) avec au moins deux modules de serrage (13) qui sont disposés sur un support (12) et qui possèdent des mâchoires de serrage (14), charactérisé en ce que le dispositif de serrage (10) possède un dispositif (30) pour l'accumulation d'une pression avec un raccord (31) pour l'air comprimé pour appliquer de la pression sur une fluide hydraulique avec l'air comprimé, que le dispositif de serrage (10) possède des conduites de fluide (21, 22, 38, 39) qui sont disposées à l'intérieur du support (12) pour former un circuit fermé de la fluide hydraulique et que les au moins deux modules de serrage (13) sont en liaison de coopération avec le circuit fermé indépendamment les uns des autres.

2. Dispositif de serrage selon la révendication 1, **caractérisé en ce que** les au moins deux modules de serrage (13) peuvent être attachés sur le support (12) et peuvent être mis en liaison de coopération avec le circuit fermé de façon réversible.

3. Dispositif de serrage selon l'une des révendications 1 ou 2, **caractérisé en ce que** le module de serrage (13) possède une élément de serrage (23) qui est précontrainte du façon flexible et pressurisable hydrauliquement des deux côtés, qui est en liaison de coopération avec les mâchoires de serrage (14) et qui, a l'état de repos, maintient les mâchoires de serrage (14) dans une position précontrainte.

4. Dispositif de serrage selon la révendication 3, **caractérisé en ce que** une plaque de pression (24) pressurisable hydrauliquement des deux côtés est prévue à l'extrémité libre de l'élément de serrage (23).

5. Dispositif de serrage selon la révendication 4, **caractérisé en ce que** la plaque de pression (24) est disposée dans un cylindre de serrage (19) et divise le cylindre de serrage (19) en en une chambre (19a) inférieure et en une chambre (19b) supérieure et que une conduite de fluide (21, 22) pour une fluide hydraulique est jointe à chaque chambre (19a, 19b).

6. Dispositif de serrage selon l'une quelconque des révendications 3 à 5, **caractérisé en ce que** l'élément de serrage (23) est en liaison de coopération avec segments de serrage (27), sur lesquels les mâchoires de serrage (14) sont montés de manière amovible.

7. Dispositif de serrage selon l'une quelconque des révendications précédentes, **caractérisé en ce que** le raccord (31) pour l'air comprimé du dispositif (30) pour l'accumulation d'une pression est en liaison de coopératio avec un cylindre pneumatique (34) qui peut être mis sous pression avec l'air comprimé et qui est relié de manière flexible avec un cylindre de compensation (35), qui est en liaison de coopération avec un réservoir (37) pour un fluide hydraulique, et que le réservoir (37) est prévu avec au moins un conduit d'admission (38) et avec au moins un conduit de sortie (39) pour un dispositif actionné hydrauliquement (10), tel que un circuit fermé pour un fluide hydraulique peut être mis en place avec le dispositif actionné hydrauliquement.

8. Dispositif de serrage selon la révendication 7, **caractérisé en ce que** le cylindre pneumatique (34) et le cylindre de compensation (35) du dispositif (30) pour l'accumulation d'une pression of the means (30) for building up pressure sont reliés à un piston (33).

9. Dispositif de serrage selon l'une des revendications 7 ou 8, **caractérisé en ce que** le cylindre de compensation (35) limite and détermines le volume du réservoir (37).

10. Dispositif de serrage selon l'une quelconque des révendications 7 à 9, **caractérisé en ce que** le raccord (31) est prévu avec un soupape (44) actionné manuellement ou automatiquement.

11. Procédé pour exploiter un dispositif de serrage (10) selon l'une quelconque des révendications 7 à 10, **caractérisé par** les étapes suivants:
- Ouvrir le raccord (31) par un soupape (44) et mettre sous pression le cylindre pneumatique (34) avec l'air comprimé;
- Comprimer le fluide hydraulique qui est disposé dans le réservoir (37);
- Mettre sous pression au moins un module de serrage (13) par l'entrée de fluide hydraulique via une conduite de fluide (21) pour ouvrir les mâchoires de serrage (14);
- Déposition d'une pièce à usiner (17) dans le module de serrage (13);
- Serrer la pièce à usiner (17) en fermer les mâchoires de serrage (14) par la sortie de fluide hydraulique via une conduite de fluide (22).

12. Procédé selon la révendication 11, **caractérisé en ce que** le raccord (31) est fermé après le serrage final et la pression hydraulique est maintenue dans le circuit fermé.

13. Procédé selon l'une des révendications 11 ou 12, **caractérisé en ce que** après la déposition de la pièce à usiner (17) dans le module de serrage (13), la pièce à usiner (17) est pré-serrée en fermer les mâchoires de serrage (14) par la sortie de fluide hydraulique via une conduite de fluide (22).

14. Procédé selon la révendication 13, **caractérisé en ce que** après le pré-serrage le module de serrage (13) est mis sous pression par l'entree de fluide hydraulique via la conduite de fluide (21) tel que les les mâchoires de serrage (14) sont fermées et la pièce à usiner (17) est serrée finalement.

15. Procédé selon la révendication 14, **caractérisé en ce que** après le pré-serrage toutes les pièces à usiner (17) deposées deposited dans le modules de serrage (13) sont serrée finalement simultanément.
